# EUROPEAN PATENT APPLICATION

(11) **EP 2 717 167 A1**
(43) Date of publication of application: **09.04.2014**
(21) Application number: 12853181.1
(22) Date of filing: 02.08.2012
(51) Int. Cl.: G06F 12/02

(54) **DATA MIGRATION TRIGGERING METHOD AND APPARATUS**

(30) Priority: 28.11.2011 CN 201110384443
(71) Applicant: Huawei Technologies Co., Ltd., Shenzhen, Guangdong 518129 (CN)
(72) Inventor: ZHANG, Dong, Chengdu Sichuan 611731 (CN)
(74) Representative: Kreuz, Georg Maria
(86) International application number: PCT/CN2012/079577
(87) International publication number: WO 2013/078879

(57) **Abstract**

The present invention provides a method and device for triggering data migration; the method includes: a host receives a data migration policy set by a user, in which the data migration policy includes a migration object, a migration condition and a target disk that are set by the user, and the migration object includes a specified file or a specified directory or data accessed by a specified application in a SAN storage system; the host resolves a block address of the migration object in the data migration policy; and the host sends a migration instruction to a disk array controller in the SAN storage system, to instruct the disk array controller to migrate the migration object from a source disk to the target disk according to the migration condition and the block address of the migration object. The host of the present invention instructs the disk array controller to carry out data migration according to the data migration policy set by the user, and resolves the block address of the migration object, so the SAN storage system can achieve the objective of migrating specified data according to a user requirement.

## Description

This application claims priority to Chinese Patent Application No. 201110384443.1, filed with the Chinese Patent Office on November 28, 2011, and entitled "PROCESSING METHOD, DISPLAY METHOD AND DEVICE OF STREAM MEDIA DATA", which is incorporated herein by reference in its entirety.

### FIELD OF THE INVENTION

The present invention relates to storage technologies, and in particular, to a method and device for triggering data migration.

### BACKGROUND OF THE INVENTION

A hierarchical storage system is generally composed of conventional disks and solid state drives (Solid State Disk or Solid State Drive, referred to as SSD for short). The SSD is also referred to as an electronic drive or a solid state electronic disk, which is a drive composed of a control unit and a solid state storage unit. Compared with a conventional disk, the solid state drive has the following advantages: quick start, because a process in which a motor accelerates and rotates is not needed; no use of a magnetic head which allows quick and random reading and an extremely short read delay; and relatively fixed read time. Addressing time of the solid state drive is independent of a data storage position, and disk fragments will not affect the read time. Therefore, hot spot data is usually cached in the SSD, so as to improve the IO speed of accessing the hot spot data.

At present, data migration in a storage area network (Storage Area Network, referred to as SAN for short) storage system is as follows: the SAN storage system firstly recognizes hot spot regions in the disk, and then migrates data in these hot spot regions from the disk to the SSD that has a higher access speed; subsequently, a host may access the data in the hot spot regions from the SSD directly, thereby increasing the data access speed. In some actual application scenarios, a user may intend to carry out targeted migration for a specified file, a specified directory or data blocks accessed by a specified application, thereby instantaneously increasing the IO (input output) speed of accessing the data. However, the data migration in the SAN storage system is entirely dependent on statistics of the hot spot regions taken by the storage system at present. The user cannot control the migration of the data in the storage system, so cannot achieve the objective of instantaneously accelerating the IO speed of the specified data.

### SUMMARY OF THE INVENTION

The present invention provides a method and device for triggering data migration, for solving shortcomings that a data migration method in an existing SAN storage system cannot carry out migration of specified data according to a user requirement.

A method for triggering data migration provided by the present invention includes:
receiving, by a host, a data migration policy set by a user, in which the data migration policy includes a migration object, a migration condition and a target disk that are set by the user, and the migration object includes a specified file or a specified directory or data accessed by a specified application in a SAN storage system;
resolving, by the host, a block address of the migration object in the data migration policy; and
sending, by the host, a migration instruction to a disk array controller in the SAN storage system, to instruct the disk array controller to migrate the migration object from a source disk to the target disk according to the migration condition and the block address of the migration object.

A device for triggering data migration provided by the present invention includes:
a policy receiving module, configured to receive a data migration policy set by a user, in which the data migration policy includes a migration object, a migration condition and a target disk that are set by the user, and the migration object includes a specified file, a specified directory or data accessed by a specified application in a SAN storage system;
an agent module, configured to resolve the block address of the migration object in the data migration policy; and
a migration instructing module, configured to send a migration instruction to a disk array controller in the SAN storage system, to instruct the disk array controller to migrate the migration object from a source disk to the target disk according to the migration condition and the block address of the migration object.

For the method and device for triggering data migration provided by embodiments of the present invention, after receiving the data migration policy set by the user, the host firstly resolves the block address of the migration object in the data migration policy with an installed agent program, and then sends the migration instruction including the block address of the migration object to the disk array controller in the SAN storage system, to instruct the disk array controller to migrate the migration object from the source disk to the target disk according to the migration condition and migration direction in the data migration policy. The host instructs the disk array controller to carry out data migration according to the data migration policy set by the user, and senses the block address of the migration object with the installed agent program, so the SAN storage system can achieve the objective of migrating the specified data according to a user requirement.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.
FIG. 1 is a flow chart of a method for triggering data migration provided by an embodiment of the present invention;
FIG. 2A is a flow chart of another method for triggering data migration provided by an embodiment of the present invention;
FIG. 2B is a diagram of an application scenario of FIG. 2A;
FIG. 2C is a flow chart of still another method for triggering data migration provided by an embodiment of the present invention;
FIG. 3A is a flow chart of still another method for triggering data migration provided by an embodiment of the present invention;
FIG. 3B is a diagram of an application scenario of FIG. 3A;
FIG. 4 is a flow chart of still another method for triggering data migration provided by an embodiment of the present invention;
FIG. 5A is a flow chart of still another method for triggering data migration provided by an embodiment of the present invention;
FIG. 5B is a diagram of an application scenario of FIG. 5A; and
FIG. 6 is a schematic structural diagram of a device for triggering data migration provided by an embodiment of the present invention.

### DETAILED DESCRIPTION OF THE EMBODIMENTS

To make the objectives, technical solutions, and advantages of the present invention more comprehensible, the following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons skilled in the art based on the embodiments of the present invention without creative efforts shall fall within the protection scope of the present invention.

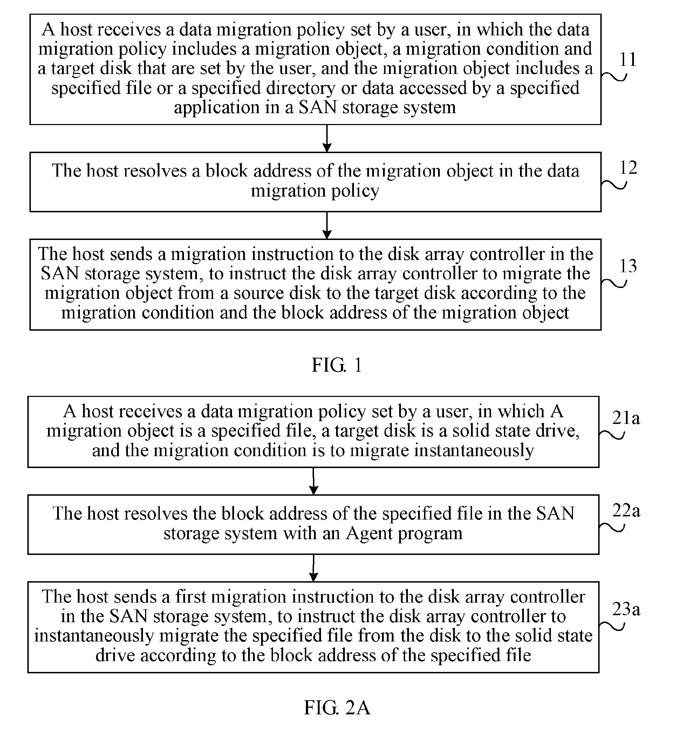

FIG. 1 is a flow chart of a method for triggering data migration provided by an embodiment of the present invention. The execution entity of the embodiment of the present invention is a host that carries out IO interaction with a storage system. As shown in FIG. 1, the method includes:

Step 11: The host receives a data migration policy set by a user, in which the data migration policy includes a migration object, a migration condition and a target disk that are set by the user, and the migration object include a specified file or a specified directory or data accessed by a specified application in a SAN storage system.

The SAN storage system of the embodiment of the present invention at least includes two types of disks with different IO speeds. For example, the SAN storage system includes a first disk and a second disk; the IO speed of the first disk is lower than the IO speed of the second disk. When the source disk where a migration object locates before it is migrated is the first disk, correspondingly, the target disk where a migration object locates after it is migrated is the second disk; and when the source disk where a migration object locates before it is migrated is the second disk, correspondingly, the target disk where a migration object locates after it is migrated is the first disk. According to access requirements, data is migrated between the first disk and the second disk under the control of a disk array controller in a hierarchical storage system.

To enable the user to control the migrated data, the host provides the user with a human-machine interface for setting the data migration policy. The user may set the data migration policy according to specific requirements, including: setting data that needs to be migrated, that is, a migration object; setting a condition under which migration is carried out, that is, setting a migration condition; and setting a target disk after the data migration. For example, the user intends to instantaneously improve the IO speed of accessing a specified file, the following data migration policy may be set through the human-machine interface: the migration object is the specified file or a specified directory in the SAN storage system, the migration condition is to migrate instantaneously, and the target disk is the second disk. In another example, the user intends to instantaneously improve the IO speed of accessing the specified application, the following data migration policy may be set through the human-machine interface: the migration object is a specified application in the SAN storage system, the migration condition is to migrate instantaneously, and the target disk is the second disk. In another example, the user intends to instantaneously reduce the IO speed of accessing a specified file, the following data migration policy may be set through the human-machine interface: the migration object is the specified file in the SAN storage system, the migration condition is to migrate instantaneously, and the target disk is the first disk. For example, the user intends to carry out IO acceleration based on an access frequency, the following data migration policy may be set through the human-machine interface: the migration object is data with an access frequency that reaches a specified frequency in the SAN storage system, the migration condition is to migrate instantaneously, and the target disk is the second disk.

Step 12: The host resolves and obtains a block address of the migration object in the data migration policy.

After receiving the data migration policy set by the user, the host obtains the block address of the migration object in the data migration policy. An agent program installed in the host may obtain, according to different migration objects, the block address of the migration object through an interface of a host file system, an operating system interface or a specific driver layer on a system IO path, and so on; a block address of a migration object may be a physical address of the migration object, and also may be a logical address of the migration object. Specifically, the agent program installed in the host may be an Agent program installed in the host.

Step 13: The host sends a migration instruction to the disk array controller in the SAN storage system, to instruct the disk array controller to migrate the migration object from the source disk to the target disk according to the migration condition and the block address of the migration object.

After obtaining the address of the migration object, the host sends the migration instruction to the disk array controller; the migration instruction includes the address of the migration object, the migration condition and the target disk, and the instruction is used to instruct the disk array controller to migrate the migration object from the source disk to the target disk according to the address of the migration object when the migration condition is met. If the physical address is mapped in the SAN storage system, and the address of the migration object sent by the host is the logical address, the disk array controller in the SAN storage system converts the logical address of the migration object into a physical address. In the embodiment of the present invention, the host, but not the disk array controller, determines the address of the migration object according to the data migration policy set by the user, and sends the migration instruction to the disk array controller.

Through the target disk set in the data migration policy, the migration object may be migrated to a target disk with a higher IO speed, and the migration object may also be migrated to a target disk with a lower IO speed; therefore, not only the requirement of the user for improving the IO speed of accessing the migration object may be satisfied, but also the requirement for reducing the IO speed of accessing the migration object may be satisfied.

In the method for triggering data migration provided by the embodiment of the present invention, after receiving the data migration policy set by the user, the host firstly obtains the block address of the migration object in the data migration policy, and then sends the migration instruction including the block address of the migration object to the disk array controller in the SAN storage system, to instruct the disk array controller to migrate the migration object from the source disk to the target disk according to the migration condition and the migration direction in the data migration policy. The host instructs the disk array controller to carry out data migration according to the data migration policy set by the user, and resolves the block address of the migration object, so the SAN storage system can achieve the objective of migrating specified data according to a user requirement.

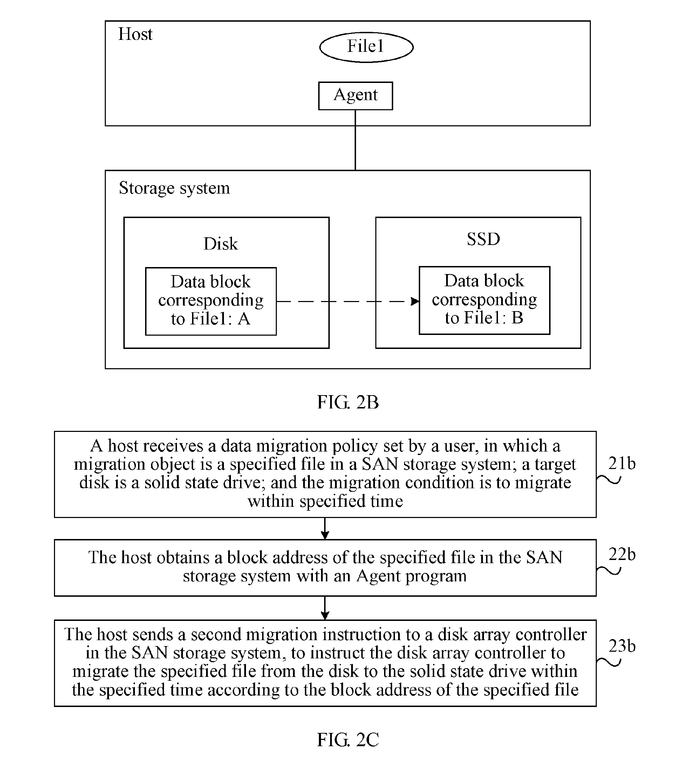

FIG. 2A is a flow chart of another method for triggering data migration provided by an embodiment of the present invention. FIG. 2B is a diagram of an application scenario provided by the embodiment of the present invention. This embodiment mainly explains how a host triggers the disk array controller to carry out data migration for a specified file when the user intends to instantaneously accelerate the IO speed of the specified file. As shown in FIG. 2B, a hierarchical storage system in this embodiment includes a disk and a solid state drive; the disk and the solid state drive store actual files, and files in a host operating system are mirrored files.

As shown in FIG. 2A, this embodiment includes:
Step 21a: The host receives a data migration policy set by a user, in which a migration object is a specified file in a SAN storage system; a target disk is a solid state drive; and a migration condition is to migrate instantaneously.

The user may give multiple specified files to be migrated in one data migration policy. The specified files may be directory files, and also may be single files. The purpose of the user to set the data migration policy is to accelerate the specified files instantaneously.

Step 22a: The host resolves a block address of the specified file in the SAN storage system with an Agent program.

The Agent program of the host may detect, through the interface of a file system, the block address of the specified file, that is, the address of a corresponding data block of the specified file; the address of the specified file may be a logic address, and also may be a physical address.

Step 23a: The host sends a first migration instruction to the disk array controller in the SAN storage system, to instruct the disk array controller to instantaneously migrate the specified file from the disk to the solid state drive according to the block address of the specified file.

The first migration instruction sent by the host includes the address of the specified file, the migration condition and the target disk. The migration condition is to migrate instantaneously; and the target disk is the solid state drive. Because the file system of the host generally includes file fragments, in order to ensure performance and efficiency, the host may not need to send the addresses of all corresponding data blocks of the specified file to the disk array controller, but only needs to send the addresses of large data blocks of the specified file to the disk array controller, and may not send the addresses of tiny data blocks to the disk array controller.

As shown in FIG. 2B, the Agent program in the host obtains the address of a specified file File1 in the SAN storage system, and sends the first migration instruction to the disk array controller in the SAN storage system, so that the disk array controller migrates the specified file File1 from the disk to the solid state drive according to the instruction. The data block corresponding to the specified file File1 before migration in the disk is A, and after being migrated to the solid state drive by the disk array controller, the corresponding data block in the solid state drive is B.

In addition, the migration condition in the step 21a may be to migrate within specified time. As shown in FIG. 2C, still another method for triggering data migration provided by an embodiment of the present invention includes:

Step 21b: A host receives a data migration policy set by a user, in which a migration object is a specified file in a SAN storage system; a target disk is a solid state drive; and a migration condition is to migrate within specified time.

The purpose of the user to set the data migration policy is to accelerate the specified file within the specified time.

Step 22b: The host obtains a block address of the specified file in the SAN storage system with an Agent program.

Step 23b: The host sends a second migration instruction to a disk array controller in the SAN storage system, to instruct the disk array controller to migrate the specified file from the disk to a solid state drive within the specified time according to the block address of the specified file.

The second migration instruction includes the address of the specified file, the migration condition and the target disk; the target disk is the solid state drive; and the migration condition is to migrate within the specified time. After receiving the second migration instruction, the disk array controller migrates the specified file from a source disk to the target disk according to the address of the specified file within the specified time.

In the method for triggering data migration provided by the present invention, a specified file is instantaneously migrated to the solid state drive, that is, a specified file is accelerated instantaneously, in the data migration policy set by the user. After receiving the data migration policy set by the user, the host sends a first migration instruction to the disk array controller after obtaining the address of the specified file through a file system interface, to instruct the disk array controller to instantaneously migrate the specified file to the solid state drive according to the address of the specified file, thereby satisfying a requirement of the user for instantaneously improving the IO speed of accessing the specified file by the host. Further, the second migration instruction may also be sent to the disk array controller under the migration condition of migrating within the specified time set by the user, to instruct the disk array controller to migrate the specified file from the source disk to the target disk according to the address of the specified file within the specified time, thereby satisfying the requirement of the user for improving the IO speed of accessing the specified file by the host within the specified time.

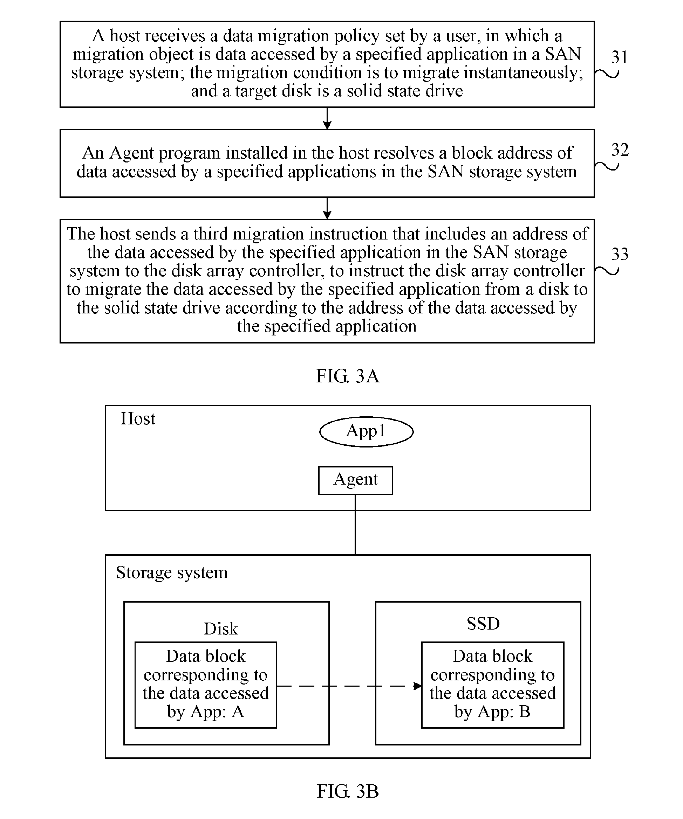

FIG. 3A is a flow chart of still another method for triggering data migration provided by an embodiment of the present invention. FIG. 3B is a diagram of an application scenario shown in FIG. 3A provided by the embodiment of the present invention. This embodiment mainly explains how a host triggers a disk array controller to carry out data migration to data accessed by a specified application when the user intends to instantaneously accelerate the IO speed of the data accessed by the specified application. As shown in FIG. 3B, the hierarchical storage system in this embodiment includes a disk and a solid state drive.

As shown in FIG. 3A, this embodiment includes:

Step 31: The host receives a data migration policy set by a user, in which a migration object is data accessed by a specified application in a SAN storage system; a migration condition is to migrate instantaneously; and a target disk is the solid state drive.

The purpose of the user to set the data migration policy is to accelerate the data accessed by the specified application instantaneously.

Step 32: An Agent program installed in the host resolves a block address of the data accessed by the specified application in the SAN storage system.

The user may define a specified application or multiple applications in one data migration policy. The host detects the address of the data accessed by the specified application through an interface of an operating system and a specified IO driver layer inserted in a system IO path; the address of the data accessed by the applications may be a logical address, and also may be a physical address.

Step 33: The host sends a third migration instruction that includes the address of the data accessed by the specified application in the SAN storage system to the disk array controller, to instruct the disk array controller to migrate the data accessed by the specified application from a disk to the solid state drive instantaneously according to the address of the data accessed by the specified application.

As shown in FIG. 3B, after obtaining the address of data accessed by a specified application App1 in the SAN storage system, the Agent in the host sends the third migration instruction to the disk array controller in the storage system, so that the disk array controller migrates the data accessed by the specified application App1 to the solid state drive according to the instruction. The data block corresponding to the data accessed by the specified application App1 before data migration in the disk is A; after the data block is migrated by the disk array controller, the corresponding data block in the solid state drive is B.

In the method for triggering data migration provided by the present invention, the data accessed by the specified application is instantaneously migrated to the solid state drive, that is, the data accessed by the specified application is accelerated instantaneously, in the data migration policy set by the user. After receiving the data migration policy set by the user, the host obtains the data accessed by the specified application through an operating system interface, and sends the second migration instruction to the disk array controller, to instruct the disk array controller to migrate the data accessed by the specified application to the solid state drive instantaneously according to a data address accessed by the specified application sent by the specified host, thereby satisfying a requirement of the user for instantaneously improving the IO speed of the data accessed by the specified application.

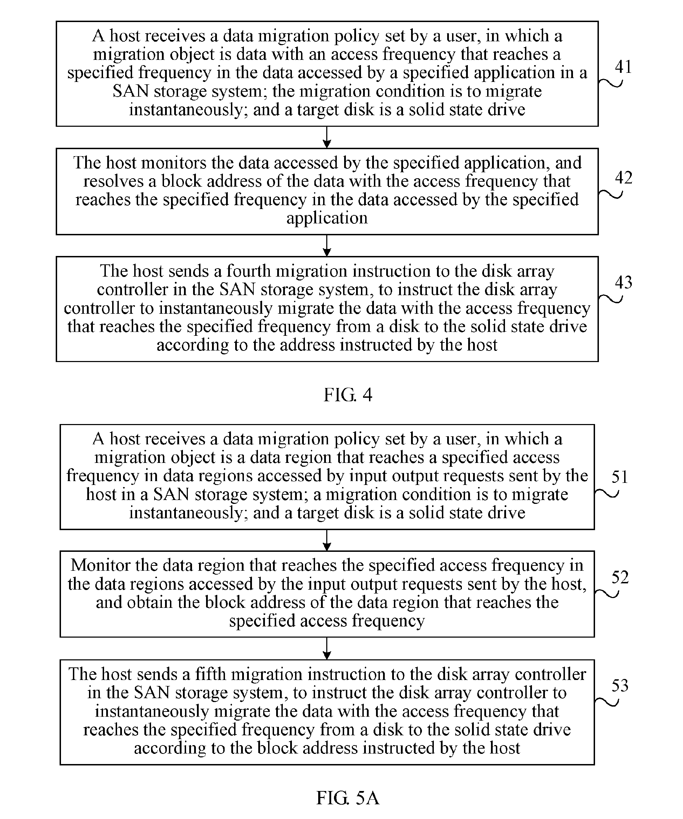

FIG. 4 is a flow chart of still another method for triggering data migration provided by an embodiment of the present invention. This embodiment mainly explains how a host triggers a disk array controller to migrate data in a SAN storage system when the user intends to instantaneously accelerate the IO speed of data with an access frequency that reaches a specified frequency in data accessed by a specified application. As shown in FIG. 4, this embodiment includes:

Step 41: The host receives a data migration policy set by a user, in which a migration object is data with the access frequency that reaches the specified frequency in the data accessed by the specified application in the SAN storage system; a migration condition is to migrate instantaneously; and a target disk is a solid state drive.

The purpose of the user to set the data migration policy is to instantaneously accelerate the data with the access frequency that reaches the specified frequency in the data accessed by the specified application in the SAN storage system.

Step 42: The host monitors the data accessed by the specified application, and resolves the block address of the data with the access frequency that reaches the specified frequency in the data accessed by the specified application.

Step 43: The host sends a fourth migration instruction to the disk array controller in the SAN storage system, to instruct the disk array controller to instantaneously migrate the data with the access frequency that reaches the specified frequency from a disk to the solid state drive according to addresses instructed by the host.

The block address instructed by the host is a block address of the data with the access frequency that reaches the specified frequency in the data accessed by the specified application. The fourth migration instruction includes the address of the data with the access frequency that reaches the specified frequency in the data accessed by the specified application and the target disk. The disk array controller instantaneously migrates the data with the access frequency that reaches the specified frequency in the data accessed by the specified application from the disk to the solid state drive according to the address instructed by the host.

In the data migration trigger method provided by the present invention, the purpose of the data migration policy of the user is to instantaneously accelerate the data with the access frequency that reaches the specified frequency in the data accessed by the specified application. After monitoring the access frequencies of the data accessed by the specified application, the host sends the fourth migration instruction to the disk array controller; the disk array controller instantaneously migrates the data with the access frequency that reaches the specified frequency in the data accessed by the specified application from the disk to the solid state drive according to the address instructed by the host, thereby satisfying a requirement of the user for instantaneously accelerating the data with the access frequency that reaches the specified frequency in the data accessed by the specified application.

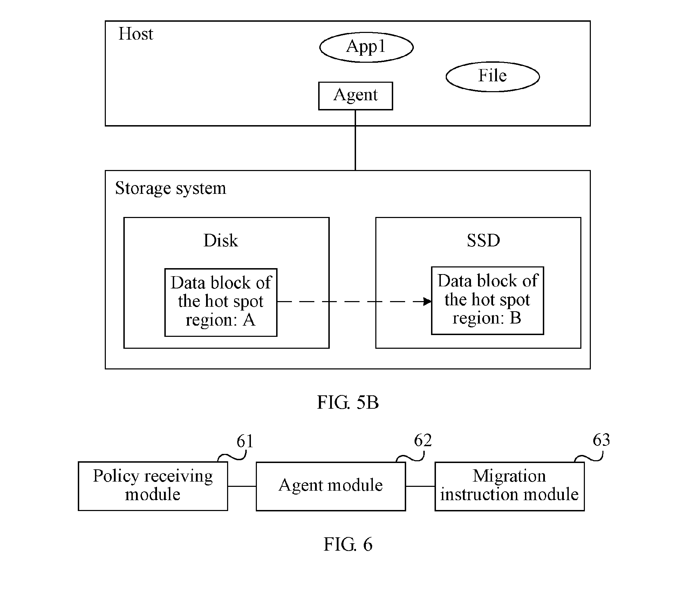

FIG. 5 is a flow chart of still another method for triggering data migration provided by an embodiment of the present invention. This embodiment mainly explains how a host triggers a disk array controller to migrate data in a SAN storage system when a user intends to instantaneously accelerate the IO speed of a hot spot region. As shown in FIG. 5, this embodiment includes:

Step 51: The host receives a data migration policy set by a user, in which a migration object is a data region that reaches a specified access frequency in data regions accessed by input output requests sent by the host in the SAN storage system; a migration condition is to migrate instantaneously; and a target disk is a solid state drive.

The purpose of the user to set the data migration policy is to instantaneously accelerate the IO speed of hot spot data accessed by the IO requests.

Step 52: Monitor the data region that reaches the specified access frequency in the data regions accessed by the input output requests sent by the host, and obtain a block address of the data region that reaches the specified access frequency.

The Agent program of the host continuously monitors all of the data regions accessed by the IO requests in the SAN storage system, and after determining the data region that reaches the specified access frequency as the host spot data region, resolve a block address of the hot spot data region.

Step 53: The host sends a fifth migration instruction to the disk array controller in the SAN storage system, to instruct the disk array controller to instantaneously migrate the data with the access frequency that reaches the specified frequency from a disk to the solid state drive according to the block address instructed by the host.

The fifth migration instruction includes the block address of the hot spot data region monitored by the host, the target disk which is the solid state drive, and the migration condition that is to migrate instantaneously. The block address instructed by the host is the block address of the data region that reaches the specified access frequency.

As shown in FIG. 5B, the data block corresponding to the hot spot regions before migration in the disk is A, and after being migrated by the disk array controller, the corresponding data block in the solid state drive is B.

For the method for triggering data migration provided by this embodiment, the host monitors the shot spot regions of the IO requests according to the data migration policy set by the user; and sends the fifth migration instruction to the disk array controller after monitoring the hot spot regions, to instruct to instantaneously migrate the data with the access frequency that reaches the specified frequency from the disk to the solid state drive according to a block address instructed by the host, thereby satisfying instantaneous acceleration carried out to the hot spot data accessed by the IO requests in the SAN storage system.

FIG. 6 is a schematic structural diagram of a device for triggering data migration provided by an embodiment of the present invention. As shown in FIG. 6, the device for triggering data migration provided by the present invention includes: a policy receiving module 61, an agent module 62 and a migration instruction module 63.

The policy receiving module 61 is configured to receive a data migration policy set by a user; the data migration policy includes a migration object, a migration condition and a target disk that are set by the user; the migration object includes a specified file, a specified directory or data accessed by a specified application in a SAN storage system.

The agent module 62 is configured to resolve a block address of the migration object in the data migration policy.

The migration instructing module 63 is configured to send a migration instruction to a disk array controller in the SAN storage system, to instruct the disk array controller to migrate the migration object from a source disk to the target disk according to the migration condition and the block address of the migration object.

When the user intends to instantaneously accelerate the IO speed of the specified file or the specified directory, the agent module 62 is specifically configured to resolve a block address of the specified file or a block address of the specified directory; the migration instruction module 63 is specifically configured to send, by the host, a first migration instruction to the disk array controller in the SAN storage system if the migration condition is to migrate instantaneously, to instruct the disk array controller to instantaneously migrate the specified file or the specified directory from the source disk to the target disk according to the block address of the specified file or the block address of the specified directory.

When the user intends to accelerate the IO speed of the specified file or the specified directory within specified time, the agent module 62 is specifically configured to resolve the block address of the specified file or the specified directory; the migration instruction module 63 is specifically configured to send, by the host, a second migration instruction to the disk array controller in a hierarchical storage system if the migration condition is to migrate within the specified time, to instruct the disk array controller to migrate the specified file or the specified directory from the source disk to the target disk according to the block address of the specified file of the block address of the specified directory within the specified time.

When the user intends to instantaneously accelerate the IO speed of data accessed by the specified application, the agent module 62 is specified configured to resolve a block address of the data accessed by the specified application in the SAN storage system; the migration object is the data accessed by the specified application in the SAN storage system; and the migration condition is to migrate instantaneously. The migration instruction module 63 is specifically configured to send a third migration instruction to the disk array controller, to instruct the disk array controller to instantaneously migrate the data accessed by the specified application from the source disk to the target disk according to the address of the data accessed by the specified application.

When the user intends to instantaneously accelerate the IO speed of data with an access frequency that reaches a specified frequency in the data accessed by the specified application, the agent module 62 is specified configured to monitor the data accessed by the specified application in the SAN storage system, and resolves a block address of the data with the access frequency that reaches a specified frequency in the data accessed by the specified application; the migration object is the data with the access frequency that reaches a specified frequency in the data accessed by the specified application in the SAN storage system; the migration condition is to migrate instantaneously; the input output speed of the target disk is greater than that of the source disk. The migration instructing module 63 is specifically configured to send a fourth migration instruction to the disk array controller, to instruct the disk array controller to instantaneously migrate the data with the access frequency that reaches the specified frequency from the source disk to the target disk according to addresses instructed by the host.

When the user intends to instantaneously accelerate the IO speed of a hot spot region, the agent module 62 is specifically configured to monitor a data region that reaches a specified access frequency in data regions accessed by input output requests sent by a host in the SAN storage system, and resolve a block address of the data region that reaches the specified access frequency; the migration object is the data region that reaches the specified access frequency in the data regions accessed by the input output requests sent by the host; the migration condition is to migrate instantaneously; the input output speed of the target disk is greater than that of the source disk. The migration instructing module 63 is specifically configured to send a fifth migration instruction to the disk array controller, to instruct the disk array controller to instantaneously migrate the data with the access frequency that reaches the specified frequency from the source disk to the target disk according to the address instructed by the host.

After receiving the data migration policy set by the user, the device for triggering data migration provided by the embodiment of the present invention firstly obtains the block address of the migration object in the data migration policy, and then sends the migration instruction including the block address of the migration object to the disk array controller in the SAN storage system, to instruct the disk array controller to migrate the migration object from the source disk to the target disk according to the migration condition and the migration direction in the data migration policy. The host instructs the disk array controller to carry out data migration according to the data migration policy set by the user, and senses the block address of the migration object with the installed agent program, so the SAN storage system can achieve the objective of migrating the specified data according to a user requirement.

Persons of ordinary skill in the art should understand that all or part of the steps of the methods in the embodiments may be implemented by a program instructing relevant hardware. The program may be stored in a computer readable storage medium. When the program runs, the above steps of the methods in the embodiments are performed. The storage medium may be any medium capable of storing program codes, such as ROM, RAM, magnetic disk, or optical disk, and the like.

Finally, it should be noted that the above embodiments are merely intended for describing the technical solutions of the present invention other than limiting the present invention. Although the present invention is described in detail with reference to the foregoing embodiments, persons of ordinary skill in the art should understood that they can still make modifications to the technical solutions described in the foregoing embodiments, or make equivalent substitutions to some technical features thereof, without departing from the spirit and scope of the technical solutions of the embodiments of the present invention.

## Claims

1. A method for triggering data migration, comprising:
Receiving, by a host, a data migration policy set by a user, wherein the data migration policy comprises a migration object, a migration condition and a target disk after migration that are set by the user, and the migration object comprise a specified file, a specified directory or data accessed by a specified application in an SAN storage system;
Resolving, by the host, a block address of the migration object in the data migration policy; and
sending, by the host, a migration instruction to a disk array controller in the SAN storage system, to instruct the disk array controller to migrate the migration object from a source disk to the target disk according to the migration condition and the block address of the migration object.

2. The method according to claim 1, wherein the migration object is the specified file or the specified directory in the SAN storage system;
the resolving, by the host, the block address of the migration object in the data migration policy, and the sending, by the host, the migration instruction to the disk array controller in the SAN storage system to instruct the disk array controller to migrate the migration object from the source disk to the target disk according to the migration condition and the block address of the migration object comprise:
resolving, by the host, a block address of the specified file or a block address of the specified directory in the SAN storage system;
sending, by the host, a first migration instruction to the disk array controller in the SAN storage system, to instruct the disk array controller to immediately migrate the specified file or the specified directory from the source disk to the target disk according to the block address of the specified file or the block address of the specified directory if the migration condition is to migrate immediately; and
sending, by the host, a second migration instruction to the disk array controller in the SAN storage system, to instruct the disk array controller to migrate the specified file or the specified directory from the source disk to the target disk within specified time according to the block address of the specified file or the block address of the specified directory if the migration condition is to migrate within the specified time.

3. The method according to claim 1, wherein the migration object is the data accessed by the specified application in the SAN storage system; and the migration condition is to migrate immediately;
the resolving, by the host, the block address of the migration object in the data migration policy, and the sending, by the host, the migration instruction to the disk array controller in the SAN storage system to instruct the disk array controller to migrate the migration object from the source disk to the target disk according to the migration condition and the block address of the migration object comprise:
resolving, by the host, a block address of the data accessed by the specified application in the SAN storage system; and
sending, by the host, a third migration instruction to the disk array controller, to instruct the disk array controller to immediately migrate the data accessed by the specified application from the source disk to the target disk according to the address of the data accessed by the specified application.

4. The method according to claim 1, wherein the migration object is data with an access frequency that reaches a specified frequency in the data accessed by the specified application in the SAN storage system; the migration condition is to migrate immediately; and an input output speed of the target disk is greater than that of the source disk;
the resolving, by the host, the block address of the migration object in the data migration policy, and the sending, by the host, the migration instruction to the disk array controller in the SAN storage system to instruct the disk array controller to migrate the migration object from the source disk to the target disk according to the migration condition and the block address of the migration object comprise:
monitoring the data accessed by the specified application in the SAN storage system, and obtaining a block address of the data with the access frequency that reaches the specified frequency in the data accessed by the specified application; and
sending, by the host, a fourth migration instruction to the disk array controller, to instruct the disk array controller to immediately migrate the data with the access frequency that reaches the specified frequency from the source disk to the target disk according to the address instructed by the host.

5. The method according to claim 1, wherein the migration object is a data region that reaches a specified access frequency in data regions accessed by input output requests sent by the host; and the migration condition is to migrate immediately;
the resolving, by the host, the block address of the migration object in the data migration policy, and the sending, by the host, the migration instruction to the disk array controller in the SAN storage system to instruct the disk array controller to migrate the migration object from the source disk to the target disk according to the migration condition and the block address of the migration object comprise:
monitoring the data region that reaches the specified access frequency of the data region accessed by the input output requests sent by the host in the SAN storage system, and obtaining the block address of the data region that reaches the specified access frequency; and
sending, by the host, a fifth migration instruction to the disk array controller, to instruct the disk array controller to immediately migrate the data with the access frequency that reaches the specified frequency from the source disk to the target disk according to the address instructed by the host, wherein an input output speed of the target disk is greater than that of the source disk.

6. A device for triggering data migration, comprising:
a policy receiving module, configured to receive a data migration policy set by a user, wherein the data migration policy comprises a migration object, a migration condition and a target disk after migration that are set by the user, and the migration object comprises a specified file, a specified directory or data accessed by a specified application in an SAN storage system;
an agent module, configured to resolve a block address of the migration object in the data migration policy; and
a migration instructing module, configured to send a migration instruction to a disk array controller in the SAN storage system, to instruct the disk array controller to migrate the migration object from a source disk to the target disk according to the migration condition and the block address of the migration object.

7. The device according to claim 6, wherein
the agent module is specifically configured to resolve a block address of the specified file or a block address of the specified directory;
the migration instructing module is specifically configured to send, by the host, a first migration instruction to the disk array controller in the SAN storage system, to instruct the disk array controller to immediately migrate the specified file or the specified directory from the source disk to the target disk according to the block address of the specified file or the block address of the specified directory if the migration condition is to migrate immediately; or,
the migration instructing module is specifically configured to send, by the host, a second migration instruction to the disk array controller in a hierarchical storage system, to instruct the disk array controller to migrate the specified file or the specified directory from the source disk to the target disk within specified time according to the block address of the specified file or the block address of the specified directory if the migration condition is to migrate within the specified time.

8. The device according to claim 6, wherein
the agent module is specifically configured to resolve a block address of the data accessed by the specified application in the SAN storage system; the migration object is the data accessed by the specified application in the SAN storage system; the migration condition is to migrate immediately; and
the migration instruction module is specifically configured to send a third migration instruction to the disk array controller, to instruct the disk array controller to immediately migrate the data accessed by the specified application from the source disk to the target disk according to the address of the data accessed by the specified application.

9. The device according to claim 6, wherein
the agent module is specifically configured to monitor the data accessed by the specified application in the SAN storage system, and resolve a block address of data with an access frequency that reaches a specified frequency in the data accessed by the specified application; the migration object is the data with the access frequency that reaches the specified frequency in the data accessed by the applications in the SAN storage system; the migration condition is to migrate immediately; an input output speed of the target disk is greater than that of the source disk;
the migration instructing module is specifically configured to send a fourth migration instruction to the disk array controller, to instruct the disk array controller to immediately migrate the data with the access frequency that reaches the specified frequency from the source disk to the target disk according to the address instructed by the host.

10. The device according to claim 6, wherein
the agent module is specifically configured to monitor a data region that reaches a specified access frequency in data regions accessed by input output requests sent by a host in the SAN storage system, and resolve a block address of the data region that reaches the specified access frequency; the migration object is the data region that reaches the specified access frequencies in the data regions accessed by the input output requests sent by the host; and the migration condition is to migrate immediately;
the migration instructing module is specifically configured to send a fifth migration instruction to the disk array controller, to instruct the disk array controller to immediately migrate the data with the access frequency that reaches the specified frequency from the source disk to the target disk according to the address instructed by the host, wherein an input output speed of the target disk is greater than that of the source disk.

11. A host, comprising:
a storage medium, configured to store instructions;
a processor, coupled with a memory, wherein the processor is configured to execute the instructions stored in the memory; and the processor is configured to:
receive a data migration policy set by a user, wherein the data migration policy comprises a migration object, a migration condition and a target disk after migration that are set by the user, and the migration object comprises a specified file or a specified directory or data accessed by a specified application in an SAN storage system; resolve a block address of the migration object in the data migration policy; and send a migration instruction to a disk array controller in the SAN storage system, to instruct the disk array controller to migrate the migration object from a source disk to the target disk according to the migration condition and the block address of the migration object.

12. The host according to claim 11, wherein the migration object is the specified file or the specified directory in the SAN storage system;
the resolving the block address of the migration object in the data migration policy, and
the sending the migration instruction to the disk array controller in the SAN storage system, to instruct the disk array controller to migrate the migration object from the source disk to the target disk according to the migration condition and the block address of the migration object comprise:
resolving a block address of the specified file or a block address of the specified directory in the SAN storage system;
sending a first migration instruction to the disk array controller in the SAN storage system, to instruct the disk array controller to immediately migrate the specified file or the specified directory from the source disk to the target disk according to the block address of the specified file or the block address of the specified directory if the migration condition is to migrate immediately; and
sending a second migration instruction to the disk array controller in the SAN storage system, to instruct the disk array controller to migrate the specified file or the specified directory from the source disk to the target disk within specified time according to the block address of the specified file or the block address of the specified directory if the migration condition is to migrate within the specified time.

13. The host according to claim 11, wherein the migration object is the data accessed by the specified application in the SAN storage system; and the migration condition is to migrate immediately;
the resolving the block address of the migration object in the data migration policy, and the sending the migration instruction to the disk array controller in the SAN storage system to instruct the disk array controller to migrate the migration object from the source disk to the target disk according to the migration condition and the block address of the migration object comprise:
resolving a block address of the data accessed by the specified application in the SAN storage system; and
sending, a third migration instruction to the disk array controller, to instruct the disk array controller to immediately migrate the data accessed by the specified application from the source disk to the target disk according to the address of the data accessed by the specified application.

14. The host according to claim 11, wherein the migration object is data with an access frequency that reaches a specified frequency in the data accessed by the specified application in the SAN storage system; the migration condition is to migrate immediately; and an input output speed of the target disk is greater than that of the source disk;
the resolving the block address of the migration object in the data migration policy, and the sending the migration instruction to the disk array controller in the SAN storage system to instruct the disk array controller to migrate the migration object from the source disk to the target disk according to the migration condition and the block address of the migration object comprise:
monitoring the data accessed by the specified application in the SAN storage system, and obtaining a block address of the data with the access frequency that reaches the specified frequency in the data accessed by the specified application; and
sending a fourth migration instruction to the disk array controller, to instruct the disk array controller to immediately migrate the data with the access frequency that reaches the specified frequency from the source disk to the target disk according to the address instructed by the host.

15. The host according to claim 11, wherein the migration object is a data region that reaches a specified access frequency in data regions accessed by input output requests sent by the host; and the migration condition is to migrate immediately;
the resolving the block address of the migration object in the data migration policy, and the sending the migration instruction to the disk array controller in the SAN storage system to instruct the disk array controller to migrate the migration object from the source disk to the target disk according to the migration condition and the block address of the migration object comprise:
monitoring the data region that reaches the specified access frequency of the data region accessed by the input output requests sent by the host in the SAN storage system, and obtaining a block address of the data region that reaches the specified access frequency; and
sending a fifth migration instruction to the disk array controller, to instruct the disk array controller to immediately migrate the data with the access frequency that reaches the specified frequency from the source disk to the target disk according to the address instructed by the host, wherein an input output speed of the target disk is greater than that of the source disk.
